# EUROPÄISCHE PATENTANMELDUNG

(11) **EP 2 811 352 A1**
(43) Veröffentlichungstag der Anmeldung: **10.12.2014**
(21) Anmeldenummer: 13170611.1
(22) Anmeldetag: 05.06.2013
(51) Int. Cl.: G05B 19/05, G05B 19/042, G06F 17/30

(54) **Verfahren zur Bearbeitung eines Automatisierungsprojektes durch eine Mehrzahl von Bearbeitungsstationen**

(71) Anmelder: Siemens Aktiengesellschaft, 80333 München (DE)
(72) Erfinder: Gerber, Serge, 91086 Aurachtal (DE); Perna, Fabio, 90482 Nürnberg (DE); Rupprecht, Georg, 90409 Nürnberg (DE)

(57) **Zusammenfassung**

Die Erfindung betrifft ein Verfahren und eine Bearbeitungsstation (ES1, ES2) zur Bearbeitung eines Automatisierungsprojektes (PR) mit zumindest einem Objekt (OBJ1, ..., OBJn), insbesondere einem Softwaremodul, durch eine Mehrzahl Bearbeitungsstationen (ES1, ES2). Eine "Download-Kennung" als Zeitstempel protokolliert für jede Kopie (Arbeitskopie) eines Objektes (K1_OBJ1, ..., K2_OBJn) einer jeden Bearbeitungsstation (ES1, ES2) den Zeitpunkt, zu dem dieses Objekt (K1_OBJ1, ..., K2_OBJn) letztmalig zu der Automatisierungskomponente (AK) übertragen ("Download") wurde und dort möglicher Weise eine vorhandene, ältere Version des Objektes (OBJ1, ..., OBJn) ersetzt hat. Damit führt jeder erfolgreich durchgeführte "Download" zu einer neuen, gültigen "Version" des Objektes (OBJ1, ..., OBJn). Wichtig ist dabei, dass ein Editieren, Kompilieren oder sonstigen Bearbeiten der Kopie des Objektes (K1_OBJ1, ..., K2_OBJn) auf der Bearbeitungsstation keine Änderung an diesen "Download-Zeitstempel" vornimmt, solange das geänderte Objekt nicht zu der Automatisierungskomponente (AK) übertragen wurde. Dadurch wird sichergestellt, dass zwischenzeitliche Änderungen an einem Objekt (OBJ1, ..., OBJn) durch eine andere Bearbeitungsstation (ES1, ES2) zum einen festgesellt werden, und zum anderen in der Kopie des Automatisierungsprojektes (K1_PR, K2_PR) der gerade synchronisierenden Bearbeitungsstation (ES1, ES2) berücksichtigt werden, wobei in den Fällen, in denen sowohl die gerade synchronisierende Bearbeitungsstation (ES1; ES2), als auch eine andere Bearbeitungsstation (ES1; ES2) Änderungen an dem Objekt (OBJ1, ..., OBJn) vorgenommen haben, auch dieses erkannt und berücksichtigt werden kann.

## Beschreibung

Die Erfindung betrifft ein Verfahren zur Bearbeitung eines Automatisierungsprojektes mit zumindest einem Objekt gemäß dem Oberbegriff des Patentanspruchs 1, und eine Bearbeitungsstation zur Durchführung des Verfahrens gemäß dem Oberbegriff des Patentanspruchs 5.

Industrielle Automatisierungskomponenten zum Einsatz in industriellen Automatisierungsanordnungen, insbesondere in der Fertigungsautomatisierung oder der Prozessautomatisierung, erhalten ihre Funktionalität im Wesentlichen durch das Aufspielen einer entsprechenden Software, wobei die Software regelmäßig aus einer Vielzahl von Funktionen, Software-Modulen, Daten-Modulen, Blöcken oder dgl. besteht; alle diese Bestandteile der Software-Projekte bzw. Automatisierungsprojekte sollen im Folgenden als Objekte bezeichnet werden.

Insbesondere während der Inbetriebnahmephase einer Automatisierungsanordnung und damit auch einer Automatisierungskomponente (z.B. PLC - Programmable Logic Controller) arbeiten häufig mehrere Personen oder Firmen gleichzeitig oder parallel an ein- und derselben Steuerung und damit an ein- und demselben Automatisierungsprojekt. Bei modernen Systemen ist dabei das Automatisierungsprojekt, welches bearbeitet wird, bereits auf der industriellen Automatisierungskomponente gespeichert, wobei im Unterschied zu älteren Systemen auch der Source-Code der Objekte, insbesondere von Programm- oder Softwaremodulen, ebenfalls auf den Automatisierungskomponenten gespeichert und von diesen abrufbar ist. Das nachstehend beschriebene Problem und die vorgeschlagene Lösung ist jedoch auch auf Programmspeicher oder ähnliche Server anwendbar, die nicht selbst ein Steuerungsgerät o.ä. einer Automatisierungsanordnung darstellen und daher im Sinne des hier beschriebenen Problems auch als Automatisierungskomponente betrachtet werden können.

Zur parallelen Bearbeitung des Automatisierungsprojektes und damit der darin enthaltenen Objekte verwendet jede Person ein eigenes Programmiergerät, welches im Folgenden auch als "Engineering-System" bezeichnet werden soll. Ein solches Engineering-System besteht beispielsweise aus zumindest einem Editor zur Bearbeitung von Programmcode (Source-Code), einem Compiler zur Übersetzung von Programmcode in ausführbaren Code, einen Linker zum Zusammenfügen verschiedener kompilierter Programmmodule zu einem kompletten Programm etc. Der Vorgang, bei dem aus den verschiedenen als Quellcode vorliegenden Programmmodulen ein ausführbares Projekt erstellt wird, wird auch als "Build" bezeichnet; im Zuge eines "Build" wird auch die Konsistenz eines Automatisierungsprojektes überprüft, d.h., dass das Zusammenwirken der verschiedenen Programmodule sichergestellt wird.

Zur Bearbeitung des Automatisierungsprojektes an verschiedenen Bearbeitungsstationen, also Engineering-Systemen, hat üblicher Weise jede Person oder Inbetriebnehmer eine Kopie ("Projektkopie") auf seinem Engineering-System gespeichert, wobei das als Kopie gespeicherte Automatisierungsprojekt von Zeit zu Zeit mit der Automatisierungskomponente ("Target") bzw. dem dort gespeicherten "Original" des Automatisierungsprojektes synchronisiert wird, also in Übereinstimmung gebracht wird. Mit dieser Synchronisierung werden regelmäßig einige oder alle in dem Automatisierungsprojekt beinhalteten Objekte synchronisiert.

Bei der parallelen Bearbeitung eines Automatisierungsprojektes an mehreren Bearbeitungsstationen (Engineering-Systeme) ergibt sich häufig das Problem, dass für jeden Bearbeiter lokal an dessen Programmiergerät bzw. Bearbeitungsstation nur die selbst verantworteten bzw. bearbeiteten Programmanteile (Objekte) zwingend aktuell sind und damit natürlich strikt vermieden werden muss, bei der Synchronisierung mit der Automatisierungskomponente solche Programmteile zu überschreiben bzw. zu beeinflussen, die von anderen Inbetriebnehmern oder Personen verantwortet werden und damit zwischenzeitlich bearbeitet oder verändert worden sind. Dies erfordert regelmäßig Absprachen der beteiligten Personen untereinander, was jedoch nicht das unbeabsichtigte Überschreiben von Änderungen anderer Personen verhindern kann. Durch solche unbeabsichtigten Zugriffe können gefährliche Inkonsistenzen auf der Automatisierungskomponente entstehen, die zu Fehlfunktionen oder dgl. führen können.

Zur Vermeidung der genannten inkonsistenten Zustände des produktiven Automatisierungsprojektes, welches auf der Automatisierungskomponente gespeichert ist, weisen moderne Steuerungen häufig eine sog. "systemgesteuerte Konsistenzsicherung" auf, wobei sichergestellt wird, dass alle Objekte des Automatisierungsprojektes nach einem Synchronisierungsvorgang mit der synchronisierenden Bearbeitungsstation übereinstimmen, d.h., dass während einer Synchronisierung alle diejenigen Objekte synchronisiert werden, deren Ausgabestand der Version auf der Automatisierungskomponente sich von der Version in der Kopie dieser synchronisierenden Bearbeitungsstation unterscheidet. Es wird also davon ausgegangen, dass die Kopie des Automatisierungsprojektes, welches auf der synchronisierenden Bearbeitungsstation gespeichert und ggf. verändert worden ist, vor dem Synchronisierungsschritt hinsichtlich ihrer "inneren" Konsistenz überprüft worden ist, beispielsweise durch das Durchführen eines "Build". Jedoch wird durch die beschriebene Vorgehensweise nicht verhindert, dass zwischenzeitliche Änderungen durch andere Bearbeitungsstationen unbeabsichtigt überschrieben werden - im Gegenteil liegt es nach wie vor in der Verantwortung des Bedieners, zwischenzeitliche Änderungen von anderen Bearbeitungsstationen zu erkennen und vor einem Überschreiben zu schützen.

Es ist also eine Aufgabe der vorliegenden Erfindung, die parallele Bearbeitung von Automatisierungsprojekten an mehreren Bearbeitungsstationen zu verbessern und dabei insbesondere das unbeabsichtigte Überschreiben von Änderungen an Objekten zu vermeiden.

Es ist ein zentraler Gedanke der erfindungsgemäßen Lösung dieser Aufgabe, dass eine sog. "Download-Kennung" eingeführt wird, also ein Zeitstempel (nachfolgend auch als "Download-Zeitstempel" bezeichnet), der für jede Kopie (Arbeitskopie) eines Objektes einer jeden Bearbeitungsstation den Zeitpunkt protokolliert, zu dem dieses Objekt letztmalig zu der Automatisierungskomponente übertragen ("Download") wurde und dort möglicher Weise eine vorhandene, ältere Version des Objektes ersetzt hat. Damit führt jeder erfolgreich durchgeführte "Download" faktisch zu einer neuen, gültigen "Version" des Objektes. Wichtig ist dabei, dass ein Editieren, Kompilieren oder sonstigen Bearbeiten der Kopie des Objektes auf der Bearbeitungsstation keine Änderung an diesem lokal der Kopie zugeordneten "Download-Zeitstempel" vornimmt, so lange das geänderte Objekt nicht zu er Automatisierungskomponente übertragen wurde. Erfindungsgemäß ist dabei im Zuge einer Synchronisierung immer feststellbar, ob ein betreffendes Objekt, welches sich bereits auf der Automatisierungskomponente befindet, seit dem letzten von der jetzt synchronisierenden Bearbeitungsstation durchgeführten "Download" des betreffenden Objektes verändert wurde. Dabei macht man sich zu Nutze, dass bereits im Stand der Technik bei jedem Objekt vorgesehen ist, dass mit einer Änderung eines Objektes (z.B. Editieren) der Zeitpunkt der letzten Änderung als ein "Änderungs-Zeitstempel" protokolliert wird, wobei dieser Zeitstempel meist zusammen mit dem Objekt gespeichert wird. Während also bei einem Synchronisierungsvorgang ein Vergleich des "Download-Zeitstempels" des auf der Automatisierungskomponente gespeicherten Objektes mit dem "Download-Zeitstempel" der Kopie dieses Objektes auf der synchronisierenden Bearbeitungsstation Auskunft darüber gibt, ob das betreffende Objekt seit der letzten Synchronisierung dieser Bearbeitungsstation von einer anderen Bearbeitungsstation verändert und damit auf der Automatisierungskomponente gespeichert wurde, kann erfindungsgemäß anhand einer Untersuchung der Änderungs-Zeitstempel und der Download-Zeitstempel über das weitere Vorgehen zur Konsistenzsicherung entschieden werden.

Die Aufgabe wird insbesondere durch ein Verfahren gemäß Patentanspruch 1 und durch eine Bearbeitungsstation gemäß Patentanspruch 5 gelöst.

Dabei wird ein Verfahren zur Bearbeitung eines Automatisierungsprojektes mit zumindest einem Objekt, insbesondere einem Software-Modul, durch eine Mehrzahl Bearbeitungsstationen vorgeschlagen, wobei das Automatisierungsprojekt auf einer industriellen Automatisierungskomponente gespeichert ist, wobei auf den Bearbeitungsstationen jeweils eine Kopie des Automatisierungsprojektes mit einer Kopie des zumindest einen Objektes zur Bearbeitung gespeichert ist, wobei mit dem oder in dem Objekt und dessen Kopien jeweils der Zeitpunkt der jeweiligen letzten Veränderung als Änderungszeitpunkt gespeichert wird, und wobei bei einer Synchronisierung einer Kopie eines Automatisierungsprojektes einer Bearbeitungsstation mit dem Automatisierungsprojekt der Automatisierungskomponente die Kopie des Objektes dieser synchronisierenden Bearbeitungsstation mit dem entsprechenden Objekt der Automatisierungskomponente in Übereinstimmung gebracht wird. Dabei wird der Zeitpunkt jeder erfolgreichen Synchronisierung des Objektes sowohl als ein Offline-Download-Zeitstempel der synchronisierten Kopie als auch als ein Online-Download-Zeitstempel dem damit auf der Automatisierungskomponente gespeicherten Objekt zugeordnet gespeichert, wobei vor einer Synchronisierung einer der Kopien des Objektes in einem ersten Schritt der Offline-Download-Zeitstempel des zu synchronisierenden Objektes mit dem Online-Download-Zeitstempel des auf der Automatisierungskomponente vorhandenen Objektes verglichen wird, wobei im Falle einer Übereinstimmung das Objekt von der Bearbeitungsstation zu der Automatisierungskomponente übertragen und dort gespeichert wird, und anderenfalls in einem zweiten Schritt der Offline-Download-Zeitstempel der Kopie des Objektes mit dem gespeicherten Änderungszeitpunkt dieser Kopie verglichen wird, wobei in dem Fall, in dem dieser Änderungszeitpunkt älter ist als dieser Download-Zeitstempel, das Objekt von der Automatisierungskomponente zu der Bearbeitungsstation übertragen wird und dort die Kopie des Objektes ersetzt, und anderenfalls in einem dritten Schritt das Objekt von der Automatisierungskomponente zu der Bearbeitungsstation übertragen und dort mit der Kopie des Objektes verglichen und/oder zusammengeführt wird. Durch dieses Verfahren wird sichergestellt, dass zwischenzeitliche Änderungen an einem Objekt durch eine andere Bearbeitungsstation zum einen festgesellt werden, und zum anderen in der Kopie des Automatisierungsprojektes der gerade synchronisierenden Bearbeitungsstation berücksichtigt werden, wobei in den Fällen, in denen sowohl die gerade synchronisierende Bearbeitungsstation, als auch eine andere Bearbeitungsstation Änderungen an dem Objekt vorgenommen haben, auch dieses erkannt und berücksichtigt werden kann.

Die Aufgabe wird außerdem durch eine Bearbeitungsstation für ein Automatisierungsprojekt mit zumindest einem Objekt gelöst, wobei das Automatisierungsprojekt auf einer industriellen Automatisierungskomponente gespeichert ist, und wobei die Bearbeitungsstation zur Durchführung des vorstehend beschriebenen Verfahrens eingerichtet ist. Durch eine solche Bearbeitungsstation können die zuvor beschriebenen Vorteile realisiert werden.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für die erfindungsgemäße Bearbeitungsstation. Die in den abhängigen Patentansprüchen beschriebenen vorteilhaften Varianten können sowohl einzeln, als auch in Kombination miteinander angewendet werden.

Vorteilhaft unterbleibt in dem ersten Schritt des Verfahrens bei einer Übereinstimmung der Download-Zeitstempel des zu synchronisierenden Objektes mit dem Online-Download-Zeitstempel des auf der Automatisierungskomponente bereits vorhandenen Objektes die Übertragung des Objektes zu der Automatisierungskomponente, so dass ein unnötiger Übertragungs- und Speicherungsvorgang unterbleiben kann und somit Zeit und Übertragungsressourcen eingespart werden können.

In einer vorteilhaften Ausgestaltung liegt das Objekt auf der Automatisierungskomponente sowohl als Quellcode als auch als ausführbares Objekt ("object code") vor, wobei im ersten, zweiten und dritten Schritt zumindest der Quellcode des Objektes übertragen wird. Dabei entfällt die sonstige Notwendigkeit, den Quellcode der ausführbaren Objekte in einer separaten Quellcode-Datenbank vorzuhalten. Weiterhin macht man sich dabei zunutze, dass zur Bearbeitung des Automatisierungsprojektes lediglich der Quellcode benötigt wird, wobei der Objekt-Code ohnehin bei einem "Build" durch Kompilierungsvorgänge neu erzeugt werden kann.

Vorteilhaft wird in dem zweiten Schritt in dem Fall, in dem der Änderungszeitpunkt älter ist als der Download-Zeitstempel, eine Kompilierung und/oder eine Konsistenzprüfung des infolge der von der Automatisierungskomponente übertragenen Kopie geänderten Automatisierungsprojektes durchgeführt, beispielsweise durch das Durchführen eines "Build". Dadurch wird sichergestellt, dass das von der Automatisierungskomponente "hochgeladene" Objekt und dessen Änderungen nicht zu Inkonsistenzen der Kopie des Automatisierungsprojektes der gerade synchronisierenden Bearbeitungsstation führt. Nach diesem "Build" oder anderen Maßnahmen zur Sicherstellung der Konsistenz der Kopie des Automatisierungsprojektes kann die Synchronisierung fortgesetzt bzw. neu begonnen werden, wodurch spätestens dann, wenn alle Objekte mittels des erfindungsgemäßen Verfahrens untersucht worden sind, der dann konsistente Zustand der Kopie des Automatisierungsprojektes auf die Automatisierungskomponente übertragen worden ist.

Ein Ausführungsbeispiel des erfindungsgemäßen Verfahrens wird nachfolgend anhand der Zeichnungen erläutert. Das Ausführungsbeispiel dient gleichzeitig der Erläuterung einer erfindungsgemäßen Bearbeitungsstation.

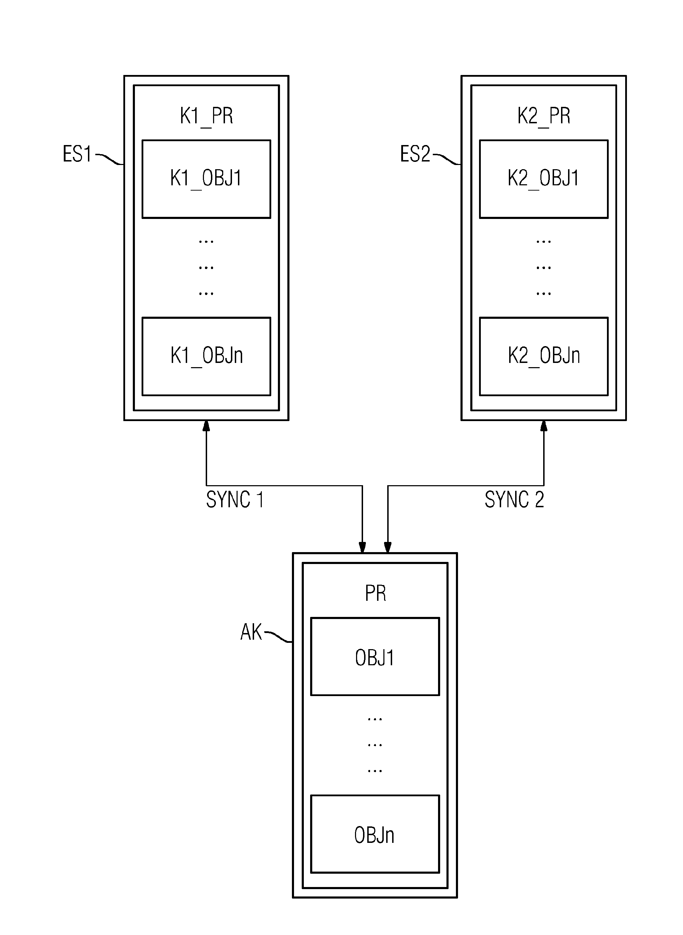

Dabei zeigt die einzige Figur in schematischer Darstellung ein Automatisierungsprojekt einer Automatisierungskomponente und die Kopien des Automatisierungsprojektes auf zwei Bearbeitungsstationen.

In der Figur ist in einer vereinfachten schematischen Darstellung der Programmspeicher einer Automatisierungskomponente AK dargestellt, der ein Automatisierungsprojekt PR enthält, wobei dieses Automatisierungsprojekt PR eine Anzahl Objekte OBJ1, ..., OBJn umfasst. Auf den Bearbeitungsstationen ES1, ES2 ("Engineering-Systeme") sind Kopien K1_PR, K2_PR des Automatisierungsprojektes PR gespeichert; diese Kopien des Automatisierungsprojektes K1_PR, K2_PR umfassen jeweils auch Kopien der Objekte K1_OBJ1, ..., K1_OBJn; K2_OBJ1, ..., K2_OBJn. Es sei angenommen, dass jede der Bearbeitungsstationen ES1, ES2 unabhängig von der jeweils anderen von einem Software-Engineer bedient wird, der die entsprechenden Kopien der Objekte K1_OBJ1, ..., K2_OBJn bearbeiten kann und von Zeit zu Zeit das jeweils lokal in Kopie vorhandene Automatisierungsprojekt K1_PR, K2_PR durch Synchronisierungsvorgänge SYNC1, SYNC2 mit dem Automatisierungsprojekt PR der Automatisierungskomponente AK synchronisiert, also in Übereinstimmung bringt. Ein solcher Synchronisierungsvorgang SYNC1 soll im Folgenden erläutert werden.

In der Folge soll beispielhaft das Objekt OBJ1 betrachtet werden, wobei weiterhin exemplarisch eine Synchronisierung SYNC1 der Bearbeitungsstation ES1 mit der Automatisierungskomponente AK beschrieben wird, und wobei diese Synchronisierung SYNC1 beginnend mit dem Objekt OBJ1 objektweise geschieht. Es wird dabei vorausgesetzt, dass mit jeder substantiellen Änderung eines Objekts OBJ1 bzw. einer Kopie des Objektes K1_OBJ1, K2_OBJ1 der Zeitpunkt dieser substantiellen Änderung jeweils als ein Änderungszeitstempel registriert wird. Obwohl diese Änderungszeitstempel des Objektes OBJ1 bzw. der Kopien des Objektes K1_OBJ1, K2_OBJ1 auch in einer externen Datenbank oder dgl. gespeichert werden können, wird im vorliegenden Ausführungsbeispiel angenommen, dass diese Änderungs-Zeitstempel und die später diskutierten Download-Zeitstempel mit dem jeweiligen Objekt bzw. dessen Kopie gespeichert werden, beispielsweise durch einen Eintrag in einem Dateisystem. Der Änderungszeitpunkt kann dabei beispielsweise derjenige Zeitpunkt sein, zu dem das entsprechende Objekt OBJ1 bzw. dessen Kopie K1_OBJ1, K2_OBJ1 letztmalig kompiliert wurde. D.h., dass der Zeitstempel nicht zwingend dem Source-Codes des Objekts zugeordnet sein muss, sondern sich auch auf den erzeugten ausführbaren Code (Object-Code, Maschinen-Code oder dgl.) beziehen kann. Der Einfachheit halber wird jedoch im Folgenden angenommen, dass die Zeitstempel immer sich auf den Source-Code beziehen und somit die Änderungs-Zeitstempel für den jeweiligen Source-Code sowohl des auf der Automatisierungskomponente AK gespeicherten Objektes OBJ1 als auch für die auf den Bearbeitungsstationen ES1, ES2 gespeicherten Kopien jeweils den Zeitpunkt angeben, zu dem die entsprechende Quellcode-Datei zuletzt tatsächlich geändert wurde, beispielsweise durch Bearbeiten einer enthaltenen Funktion oder dgl. Weiter wird für jedes Objekt, und zwar sowohl für das "produktiv" gespeicherte "Original" des Objektes OBJ1, als auch für die "Arbeitskopien" des Objektes K1_OBJ1, K2_OBJ1, jeweils registriert, wann dieses Objekt bzw. dessen Kopie zuletzt zu der Automatisierungskomponente AK übertragen und dort gespeichert wurde. Dies bedeutet, dass dieser "Download-Zeitstempel" sowohl für das Objekt OBJ1 als auch für die Kopie K1_OBJ1 identisch ist, wenn die auf der Automatisierungskomponente AK vorliegende Version des Objektes OBJ1 von der Bearbeitungsstation ES1 stammt, während beispielsweise in den Fällen, in denen die Bearbeitungsstation ES2 zuletzt die Kopie des Objektes K2_OBJ1 zu der Automatisierungskomponente AK übertragen und dort gespeichert hat, eben der "Download-Zeitstempel" des Objektes OBJ1 identisch ist mit dem der Kopie des Objektes K2_OBJ1. Da in vielen Fällen Dateisysteme den Zeitpunkt der letztmaligen Speicherung eines Objektes oder einer Datei ohnehin speichern, kann dieser Dateisystem-Eintrag aus dem Dateisystem der Automatisierungskomponente AK als "Online-Download-Zeitstempel" des Objektes OBJ1 verwendet werden; für die Kopien dieses Objektes K1_OBJ1, K2_OBJ1 geht dies natürlich nicht, weil es unerheblich ist, wann die Kopien jeweils gespeichert wurden; diese Information sagt eben nichts darüber aus, wann dieses Objekt zuletzt zu der Automatisierungskomponente AK übermittelt wurde.

Bei der Synchronisierung SYNC1 der Bearbeitungsstation ES1 mit der Automatisierungskomponente AK wird zunächst für jedes Objekt und damit auch für das Objekt OBJ1 bzw. der lokalen Kopie dieses Objektes K1_OBJ1 überprüft, ob eine Synchronisierung und damit ein "Download" überhaupt notwendig ist. Dabei wird der Änderungszeitpunkt des "Online-Objektes" OBJ1 von der Automatisierungskomponente AK abgerufen und mit dem (letzten) Änderungszeitpunkt der Kopie des Objektes K1_OBJ1 verglichen; sofern diese beiden Änderungszeitpunkt übereinstimmen, wird davon ausgegangen, dass die Kopie des Objektes K1_OBJ1 mit dem Objekt OBJ1 übereinstimmt und somit eine Synchronisierung dieses Objektes nicht notwendig ist.

Im Folgenden sei angenommen, dass sich die Änderungszeitpunkte unterscheiden. Dies bedeutet, dass die lokal gespeicherte Kopie des Objektes K1_OBJ1 höchstwahrscheinlich nicht identisch ist mit dem "Online-Objekt" OBJ1. Es ergibt sich also die Frage, wer bzw. welche Bearbeitungsstation ES1, ES2 diese Abweichung bewirkt hat, woraus sich die nachfolgend durchzuführenden Maßnahmen ergeben.

Dazu wird nun der "Online-Download-Zeitstempel" des Objektes OBJ1 von der Automatisierungskomponente AK mit dem "Offline-Download-Zeitstempel" der Kopie des Objektes K1_OBJ1 verglichen. Dieser Vergleich wird praktischer Weise durch die Bearbeitungsstation ES1 vorgenommen, die auch den Synchronisierungsvorgang SYNC1 steuert. Dazu wird der "Online-Download-Zeitstempel" des Objektes OBJ1 von der Automatisierungskomponente AK abgerufen. Sofern diese beiden "Download-Zeitstempel" gleich sind, ist davon auszugehen, dass die gerade synchronisierende Bearbeitungsstation ES1 das Objekt OBJ1 zuletzt zu der Automatisierungskomponente AK übertragen und dort gespeichert hat, wenn auch in einem anderen Bearbeitungsstand. Die Abweichung in den Änderungszeitstempeln muss also daher rühren, dass die Bearbeitungsstation ES1 bzw. deren Benutzer seit dem letzten eigenen "Download" des Objektes OBJ1 die Kopie des K1_OBJ1 verändert hat, während durch die Bearbeitungsstation ES2 zwischenzeitlich keine Änderungen des Objektes OBJ1 vorgenommen worden sein kann. In diesem Fall kann die Kopie des Objektes K1_OBJ1 für den "Download" zu der Automatisierungskomponente AK vorgesehen werden, wobei dieser "Download" erst dann erfolgen sollte, wenn alle Objekte OBJ1, ..., OBJn entsprechend untersucht wurden.

Nun soll der abweichende Fall diskutiert werden, wenn also gilt, dass sich die beiden zuvor verglichenen "Download-Zeitstempel" voneinander unterscheiden. Dies bedeutet, dass seit der letzten Synchronisierung der Bearbeitungsstation ES1 mit der Automatisierungskomponente AK das dort gespeicherte Objekt OBJ1 zwischenzeitlich von einer anderen Bearbeitungsstation gespeichert bzw. "überschrieben" wurde, beispielsweise durch die Bearbeitungsstation ES2. In einem realen Szenario können natürlich auch weitaus mehr Bearbeitungsstationen an dem Automatisierungsprojekt arbeiten.

In dem jetzt vorliegenden Fall würde ein einfaches Überschreiben des Objektes OBJ1 der Automatisierungskomponente AK mit der lokalen Kopie K1_OBJ1 möglicher Weise zu inkonsistenten Zuständen oder aber zumindest zu einer Zerstörung der zwischenzeitlich vorgenommenen Änderungen an dem Objekt OBJ1 führen. Es soll daher unterschieden werden, ob nur eine andere Bearbeitungsstation, beispielsweise die Bearbeitungsstation ES2, seit der letzten Synchronisierung der Bearbeitungsstation ES1 mit der Automatisierungskomponente AK das Objekt OBJ1 veränder hat, oder ob auch in der Bearbeitungsstation ES1 seit dem letzten erfolgreichen "Download" die Kopie des Objektes OBJ1 verändert wurde, oder nicht.

Sofern der "Offline"-Änderungszeitstempel der Kopie des Objektes K1_OBJ1 älter ist als der (eigene) "Offline-Download-Zeitstempel" der Kopie des Objektes K1_OBJ1, hat seit der letzten Synchronisierung der Bearbeitungsstation ES1 in dieser Bearbeitungsstation ES1 keine Veränderung des Objektes bzw. der Kopie des Objektes K1_OBJ1 stattgefunden; es hat also nur eine andere Bearbeitungsstation das Objekt OBJ1 geändert. In diesem Fall kann das Objekt OBJ1 von der Automatisierungskomponente zu der Bearbeitungsstation ES1 "hochgeladen" werden und dort die bisherige Kopie des Objektes K1_OBJ1 ersetzen bzw. überschreiben. Damit sind die Änderungen einer anderen Bearbeitungsstation in die Kopie des Automatisierungsprojektes K1_PR aufgenommen worden. Nun muss sichergestellt werden, dass aufgrund der anderweitigen Änderungen kein inkonsistenter Zustand entstanden ist bzw. entstehende Inkonsistenzen müssen bereinigt werden. Dazu wird die Konsistenz der Kopie des Automatisierungsprojektes K1_PR überprüft, indem beispielsweise durch einen "Build" das Automatisierungsprojekt bzw. die Kopie des Automatisierungsprojektes K1_PR kompiliert wird, wobei etwaige Inkonsistenzen offenbar werden und somit bereinigt werden können. Danach kann die Synchronisierung SYNC1 fortgesetzt oder neu gestartet werden, wobei nun zwangsläufig das Objekt OBJ1 der Automatisierungskomponente AK und dessen Kopie K1_OBJ1 identisch sein müssen und allenfalls etwaige Differenzen bezüglich der anderen Objekte festgestellt und bereinigt werden müssen.

Abweichend zu dem zuletzt geschilderten Fall, bei dem lediglich eine andere Bearbeitungsstation Änderungen an dem Objekt OBJ1 vorgenommen hat, kann bei dem Vergleich des "Offline"-Änderungs-Zeitstempels der Kopie des Objektes K1_OBJ1 mit dem "Offline-Download-Zeitstempel" der Kopie des Objektes K1_OBJ1 der Fall eintreten, dass der Änderungszeitstempel jünger ist als der "Download-Zeitstempel". In diesem Fall wurde seit der letzten Synchronisierung auch in der Bearbeitungsstation ES1 die Kopie des Objektes K1_OBJ1 verändert. Zusammen mit dem vorherigen aus dem Vergleich der "Download-Zeitstempel" resultierenden Wissen, das auch eine andere Bearbeitungsstation zwischenzeitlich das Objekt OBJ1 geändert hat, ist somit der Fall eingetreten, dass zueinander konkurrierende Änderungen des Objektes OBJ1 vorgenommen wurden, also sowohl von der Bearbeitungsstation ES1, als auch von einer anderen Bearbeitungsstation. Auch in einem solchen Fall sollte zuerst das Objekt OBJ1 von der Automatisierungskomponente zu der Bearbeitungsstation ES1 "hochgeladen" werden, darf aber dort zunächst nicht die vorhandene Kopie des Objektes K1_OBJ1 überschreiben. Vielmehr müssen das hochgeladene Objekt OBJ1 und die bereits vorliegende Kopie des Objektes K1_OBJ1 zusammengeführt werden, wozu es beispielsweise sinnvoll sein kann, die beiden Objekte mittels eines Textvergleiches oder dgl. miteinander zu vergleichen, so dass ein Bediener einander widersprechende Änderungen erkennen kann bzw. die beiden ihm vorliegenden Versionen zu einer einzigen Version konsolidieren kann. Es empfiehlt sich, nach dieser Konsolidierung beispielsweise mittels eines "Build" sicherzustellen, dass die resultierende Version konsistent ist zu den restlichen Kopien der Objekte innerhalb der Kopie des Automatisierungsprojekte K1_PR. Danach kann der Synchronisierungsvorgang SYNC1 fortgesetzt oder neu gestartet werden, wobei jedoch im Fall eines Neustarts die Konsistenzprüfung bezüglich des Objektes OBJ1 übersprungen werden sollte und stattdessen die "konsolidierte" Version des Objektes OBJ1 zu der Automatisierungskomponente AK übertragen und dort gespeichert werden sollte.

Zusammengefasst wird mit den vorstehend beschriebenen Abläufen sichergestellt, dass in den Fällen, in denen alle Änderungen der Software einer Automatisierungskomponente immer von dergleichen Projektkopie aus vorgenommen werden, die aus dem Stand der Technik bekannte systemgesteuerte Konsistenzsicherung zum Erhalt eines konsistenten Zustands auf der Automatisierungskomponente AK ausreicht. Sofern von wechselnden Projekt-Kopien K1_PR, K2_PR aus Objekte auf die Automatisierungskomponente geladen werden, kann mit Hilfe der neu eingeführten "Download-Zeitstempel" (auch als "Download-Kennungen" bezeichnet) und einer darauf basierenden Synchronisierungsfunktion sichergestellt werden, dass auch im Falle voneinander unabhängiger Erweiterungen oder Änderungen in Objekten dennoch eine Konsistenz des Projektes PR sichergestellt werden kann. Dies gilt sogar für den Fall, dass eine zu übernehmende Änderung Rückwirkungen auf andere Teile des Projektes hat, beispielsweise durch eine Neukompilierung von Adressen oder dgl. Im Fall abhängiger Erweiterungen, beispielsweise durch simultane Änderungen durch mehrere Bearbeitungsstationen ES1, ES2, wird dies zumindest erkannt und allein durch das Erkennen und einer entsprechenden Reaktion können Inkonsistenzen vermieden werden, insbesondere durch die Anwendung von Vergleichseditoren und anderen bekannten Hilfsmitteln.

## Patentansprüche

1. Verfahren zur Bearbeitung eines Automatisierungsprojektes (PR) mit zumindest einem Objekt (OBJ1, ..., OBJn), insbesondere einem Softwaremodul, durch eine Mehrzahl Bearbeitungsstationen (ES1, ES2),
wobei das Automatisierungsprojekt (PR) auf einer industriellen Automatisierungskomponente (AK) gespeichert ist,
wobei auf den Bearbeitungsstationen (ES1, ES2) jeweils eine Kopie des Automatisierungsprojektes (K1_PR, K2_PR) mit einer Kopie des zumindest einen Objektes (K1_OBJ1, ..., K2_OBJn) zur Bearbeitung gespeichert ist,
wobei mit dem oder in dem Objekt (OBJ1, ..., OBJn) und dessen Kopien jeweils der Zeitpunkt der jeweiligen letzten Veränderung als Änderungszeitpunkt gespeichert wird, und
wobei bei einer Synchronisierung einer Kopie eines Automatisierungsprojektes (K1_PR, K2_PR) einer Bearbeitungsstation (ES1; ES2) mit dem Automatisierungsprojekt (PR) der Automatisierungskomponente (AK) die Kopie des Objektes (K1_OBJ1, ..., K2_OBJn) dieser synchronisierenden Bearbeitungsstation (ES1; ES2) mit dem entsprechenden Objekt (OBJ1, ..., OBJn) der Automatisierungskomponente (AK) in Übereinstimmung gebracht wird,
**dadurch gekennzeichnet,**
**dass** der Zeitpunkt jeder erfolgreichen Synchronisierung des Objektes (OBJ1, ..., OBJn) sowohl als ein Offline-Download-Zeitstempel der synchronisierten Kopie als auch als ein Online-Download-Zeitstempel dem damit auf der Automatisierungskomponente (AK) gespeicherten Objekt (OBJ1, ..., OBJn) zugeordnet gespeichert wird,
**dass** vor einer Synchronisierung einer der Kopien des Objektes (K1_OBJ1, ..., K2_OBJn)
- in einem ersten Schritt der Offline-Download-Zeitstempel des zu synchronisierenden Objektes (OBJ1, ..., OBJn) mit dem Online-Download-Zeitstempel des auf der Automatisierungskomponente (AK) vorhandenen Objektes (OBJ1, ..., OBJn) verglichen wird, wobei im Falle einer Übereinstimmung das Objekt (OBJ1, ..., OBJn) von der Bearbeitungsstation (ES1; ES2) zu der Automatisierungskomponente (AK) übertragen und dort gespeichert wird, und anderenfalls
- in einem zweiten Schritt der Offline-Download-Zeitstempel der Kopie des Objektes (K1_OBJ1, ..., K2_OBJn) mit dem gespeicherten Änderungszeitpunkt dieser Kopie verglichen wird, wobei in dem Fall, in dem dieser Änderungszeitpunkt älter ist als dieser Download-Zeitstempel, das Objekt (OBJ1, ..., OBJn) von der Automatisierungskomponente (AK) zu der Bearbeitungsstation (ES1; ES2) übertragen wird und dort die Kopie des Objektes (K1_OBJ1, ..., K2_OBJn) ersetzt, und anderenfalls
- in einem dritten Schritt das Objekt (OBJ1, ..., OBJn) von der Automatisierungskomponente (AK) zu der Bearbeitungsstation (ES1; ES2) übertragen und dort mit der Kopie des Objektes (K1_OBJ1, ..., K2_OBJn) verglichen und/oder zusammengeführt wird.

2. Verfahren nach Patentanspruch 1,
**dadurch gekennzeichnet,**
**dass** in dem ersten Schritt bei einer Übereinstimmung eine Übertragung des Objektes (OBJ1, ..., OBJn) zu der Automatisierungskomponente (AK) unterbleibt.

3. Verfahren nach einem der vorhergehenden Patentansprüche,
**dadurch gekennzeichnet,**
**dass** auf der Automatisierungskomponente (AK) das Objekt (OBJ1, ..., OBJn) sowohl als Quellcode als auch als ausführbares Objekt (OBJ1, ..., OBJn) vorliegt, wobei im ersten, zweiten und dritten Schritt zumindest der Quellcode des Objektes (OBJ1, ..., OBJn) übertragen wird.

4. Verfahren nach einem der vorhergehenden Patentansprüche,
**dadurch gekennzeichnet,**
**dass** in dem zweiten Schritt in dem Fall, in dem der Änderungszeitpunkt älter ist als der Download-Zeitstempel, eine Compilierung und/oder eine Konsistenzüberprüfung des mittels der von der Automatisierungskomponente (AK) übertragenen Kopie geänderten Automatisierungsprojektes (K1_PR, K2_PR) erfolgt, wonach eine erneute Synchronisierung des Automatisierungsprojektes der Bearbeitungsstation (ES1; ES2) mit dem Automatisierungsprojektes der Automatisierungskomponente (AK) erfolgt.

5. Bearbeitungsstation (ES1; ES2) für ein Automatisierungsprojekt (PR) mit zumindest einem Objekt (OBJ1, ..., OBJn),
wobei das Automatisierungsprojekt (PR) auf einer industriellen Automatisierungskomponente (AK) gespeichert ist,
**dadurch gekennzeichnet,**
**dass** die Bearbeitungsstation (ES1; ES2) zur Durchführung des Verfahrens gemäß dem Patentanspruch 1 eingerichtet ist.
